# EUROPEAN PATENT SPECIFICATION

(11) **EP 2 948 011 B1**
(45) Date of publication and mention of the grant of the patent: **02.11.2016**
(21) Application number: 14700461.8
(22) Date of filing: 13.01.2014
(51) Int. Cl.: A43B 1/00, A43B 13/12, B32B 27/06, B29D 35/12, B29D 35/14, B32B 27/08, B32B 27/20, B32B 27/40, B29C 44/14, B29C 44/16, B32B 3/28

(54) **TREAD COVERING FILM FOR A SOLE OF SHOES OF POLYURETHANE-BASED POLYMER MATERIAL**
LAUFFLÄCHENABDECKFOLIE FÜR EINE SCHUHSOHLE AUS EINEM POLYMERMATERIAL AUF POLYURETHANBASIS
FILM DE COUVERTURE DE BANDE DE ROULEMENT POUR UNE SEMELLE DE CHAUSSURES EN MATÉRIAU POLYMÈRE À BASE DE POLYURÉTHANNE

(30) Priority: 25.01.2013 IT PD20130015
(43) Date of publication of application: 02.12.2015
(73) Proprietor: Spac S.P.A., 36071 Arzignano VI (IT); Novotex Italiana S.p.A., 20124 Milano (IT)
(72) Inventor: BEDESCHI, Edoardo, I-37036 San Martino Buon Albergo (VR) (IT); MAGNI, Paolo, I-20081 Abbiategrasso (MI) (IT)
(74) Representative: Susanetto, Carlo
(86) International application number: PCT/EP2014/050441
(87) International publication number: WO 2014/114509

(56) References cited:
- US-A- 3 505 436
- US-A- 4 151 661
- US-A- 5 068 143
- US-A1- 2005 131 109
- US-A1- 2011 190 406

## Description

### Technical field

The present invention relates to a tread covering film for a sole of shoes of polyurethane-based polymer material having the characteristics set out in the preamble of the main claim.

The present invention further relates to a sole comprising a tread covering film and a process for producing such a sole.

### Technological background

In the footwear technical field, there are known soles produced from polymer material, for example, based on expanded polyurethane, to whose surface which is intended for contact with the ground there is applied a tread covering film.

This is called upon to meet various requirements, which are both technical requirements relating, for example, to the protection of the main body of the sole from wear and from mechanical stresses connected with walking, and aesthetic requirements, since it represents the surface of the sole which is predominantly visible.

Owing to the good mechanical and processing characteristics thereof, it is known to construct those tread covering films from polyurethane material.

Typically, during the moulding step of the sole, the tread covering film is advantageously thermoformed so as to define a plurality of reliefs and grooves, having suitable dimensions and forms and forming the "tread pattern" of the sole.

The film thermoforming process may, particularly at the large number of edges present in a tread pattern, result in phenomena of local stretching of the polymer material which, as a result of the preferential orientation of the polymer chains, brings about greater gloss of those regions.

In some types of shoe, particularly in elegant shoes, however, a sole in which glossy regions are present is unacceptable in aesthetic terms.

In order to overcome this disadvantage, therefore, this type of sole is generally subjected to an additional processing step, in which the tread covering film is sprayed with an opaque varnish.

However, the varnishing operations involve a series of disadvantages which bring about a higher production cost.

### Disclosure of the invention

The problem addressed by the present invention is to provide a tread covering film which allows a sole for shoes of polyurethane-based polymer material to be obtained which is structurally and functionally configured to overcome the limitations set out above with reference to the cited prior art.

Within the scope of this problem, an object of the invention is to provide a tread covering film which maintains its characteristics in terms of opacity even when thermoformed in order to form a tread pattern of the sole.

Another object of the invention is to provide a covering film which can simplify the production process of the sole.

This problem is solved and those objects are achieved by the present invention by means of a tread covering film, a sole for shoes comprising that film and a process for producing a sole for shoes carried out in accordance with the appended claims.

### Brief description of the drawings

The features and advantages of the invention will be better appreciated from the detailed description of a preferred embodiment thereof, illustrated by way of non-limiting example with reference to the appended drawings, in which:
- Figure 1 is a cross-section of a sole for shoes provided with a tread covering film produced according to the present invention,
- Figure 2 is a diagram of the production process for the covering film of Figure 1.

### Preferred embodiment of the invention

In the Figures, there is generally designated 1 a sole for shoes produced according to the present invention.

The sole 1 comprises a main body 2 of polyurethane-based polymer material and a tread covering film 3 which is applied to the main body 2 at a tread surface 4 which is defined on the sole 1.

A tread pattern which is formed by a plurality of reliefs 5 and grooves 6 is formed on the tread surface 4.

The tread pattern may be produced in accordance with any formation as a function of the type of shoe to which the sole 1 is applied.

The shoe to which the sole 1 is applied is preferably an elegant shoe and the tread covering film 3 has a high level of opacity which is substantially uniform both in the planar regions of the tread surface and at the edges between reliefs 5 and grooves 6.

The tread covering film 3 has a thickness between 100 µm and 350 µm and, in addition to the entire tread surface 4, also covers the sole 1 in the region of the sides thereof extending towards the upper portion of the shoe. The covering of the sides may be total or also only partial, for example, in order to confer a bi-colour appearance on the sole 1.

The tread covering film 3 comprises a support layer 10, which is connected to the main body 2, and an outer layer 11 which is connected to the support layer 10 at the side opposite the main body 2 and which is directed towards the outer side of the sole 1 in order to form the visible portion of the tread covering film 3.

The support layer 10 has a thickness between 50 µm and 300 µm and preferably comprises a membrane of thermoplastic polyurethane obtained by calendering.

The thermoplastic polyurethane forming the basis of the membrane forming the support layer 10 is capable of being thermoformed in accordance with the tread pattern of the sole 1 and is preferably an aromatic polyester polyurethane having a softening temperature in the range from 70 to 80°C, a melting temperature between 140°C and 155°C, ultimate elongation and an ultimate tensile strength (measured in accordance with the standard ISO 37) of approximately from 500 to 550% and from 35 to 50 N/mm², respectively, a modulus of elasticity measured at an extension of 100% and 300% (always in accordance with the standard ISO 37) of approximately from 3 to 5 and approximately from 7 to 8, respectively.

Since it is obtained by means of a calendering process, the membrane has high levels of isotropic characteristics, owing to which the tread covering film 3 has the high levels of mechanical characteristics set out above in all directions, which is a very advantageous aspect in a tread covering film for soles of shoes. Conversely, a membrane obtained by other processes, for example, by extrusion, has different mechanical characteristics in accordance with the direction in which they are measured.

The outer layer 11 is also formed by a polyurethane admixture which is capable of being thermoformed in accordance with the tread pattern of the sole 1, and preferably that polyurethane admixture is substantially identical to the polyurethane admixture forming the basis of the membrane which forms the support layer 10 and which is described above.

The outer layer 11 has a thickness between 20 µm and 150 µm and is advantageously obtained by means of a spreading operation and then coupled to the support layer 10.

According to a main aspect of the present invention, the polyurethane admixture from which the outer layer 11 is formed comprises a percentage of from 3% to 15% by weight, and preferably from 6% to 9% by weight, of silica as an opacifying agent.

Preferably, that silica is formed by pyrolisis so as to be more efficient in terms of its opacifying function, reducing the quantity of silica necessary for obtaining a given level of opacity, since excessively high quantities of silica may result in a decline in the mechanical characteristics of the outer layer 11, for example, the resistance thereof to tearing.

The outer surface 11a of the outer layer 11 which forms the tread surface 4 in the sole 1 has a gloss level which is measured in accordance with the standard ISO 2813 of approximately 0.2 (at an angle of 20 degrees), approximately 0.7 (at an angle of 60 degrees) and approximately 1.9 (at an angle of 85 degrees).

That gloss level is obtained both with the addition of silica and with the use of a spreading support having adequate roughness.

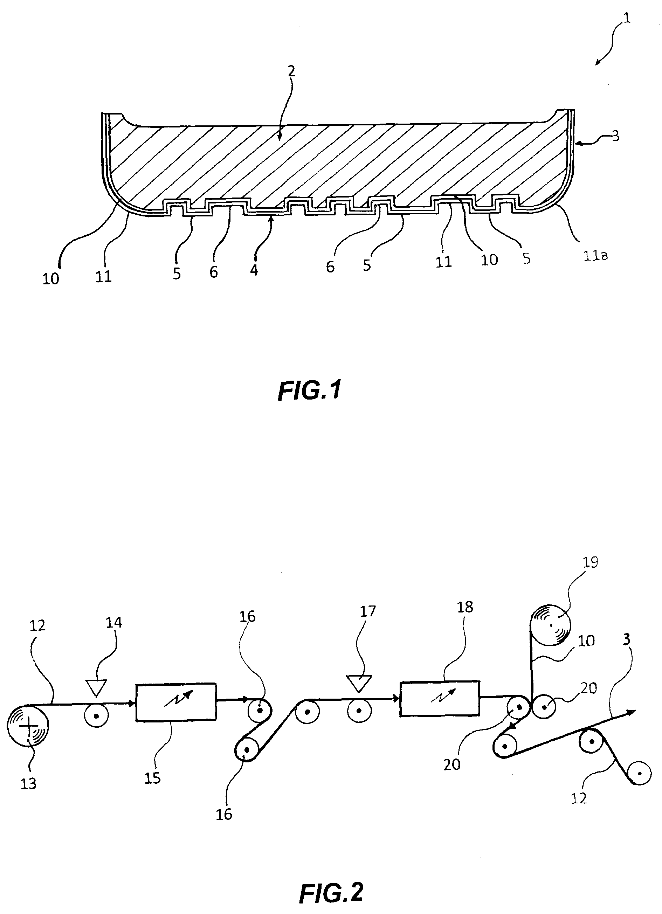

The tread covering film 3 is obtained by spreading and connection in the following manners, set out schematically in Figure 2.

A paper support 12 having suitable roughness is unwound from a roll 13 and directed into the region of a spreading head 14 which provides for spreading a polyurethane admixture thereon in a solvent having a weight per surface-area unit of approximately from 60 to 150 g/m², preferably approximately 100 g/m².

The polyurethane admixture dispensed from the spreading head 14 contains from 1% to 5% by weight, preferably approximately 3% by weight, of silica as an opacifying agent, obtained by means of pyrolisis.

The paper support with the spread polyurethane admixture is then introduced into a first oven 15 where the solvent is evaporated so that only the polyurethane remains on the paper support 12, at a weight per surface-area unit of approximately from 20 to 50 g/m².

Upon leaving the first oven 15, the support having the layer of polyurethane after being cooled on a pair of drums 16 is directed to a second spreading head 17 which provides for spreading an adhesive admixture, preferably with a polyurethane base in additional solvent, where applicable with a colouring agent, on the polyurethane layer.

After the second spreading operation, the layer is moved into a second oven 18 and then coupled to a membrane which forms the support layer 10 supplied from a roll 19.

The coupling is brought about from the side at which the adhesive admixture has been spread in the region of rolls 20 which are advantageously heated.

Downstream of the rolls 20, the paper support 12 is then separated from the spread polyurethane layer, forming the outer layer 11, thereby obtaining the tread covering film 3, formed by the support layer 10 and the outer layer 11.

The sole 1 is produced with a moulding process which provides for the following steps.

The tread covering film 3 is positioned inside a suitable mould in such a manner that the outer layer 11 is in contact with an inner surface of the mould which is advantageously formed to reproduce the tread pattern of the sole 1. The tread covering film 3 is preferably pre-heated before being inserted in the mould.

An admixture of expansible polyurethane reagents is then poured into the mould and the mould is closed. That admixture reacts and expands so as to form the polyurethane of the main body 2 of the sole 1 and, consequently, presses the tread covering film 3 against the outer surface of the mould. The temperature and pressure conditions as a result of the polymerisation and expansion reaction taking place in the mould, to which the tread covering film 3 is subjected, are such that it becomes thermoformed in accordance with the tread pattern formed on the inner surface of the mould.

The polyurethane of the main body 2 being formed further adheres powerfully to the already-formed polyurethane of the support layer 10, bringing about an effective connection between the main body 2 and the tread covering film 3.

At the end of the reaction, the sole 1 is removed from the mould.

Owing to the presence in the outer layer 11 of the silica at the quantities set out above, the tread surface 4 is uniformly opaque without any need for additional varnishing operations.

The present invention therefore solves the problem set out above with reference to the cited prior art, providing at the same time a number of other advantages, including a reduction in production times, a reduction in environmental and processing problems connected with the varnishing operations.

## Claims

1. A tread covering film (3) for soles (1) of shoes of polyurethane-based polymer material comprising a support layer (10), which is capable of being connected to the polyurethane-based polymer material of the sole, and an outer layer (11) which is superimposed on the support layer and which is formed by a polyurethane admixture capable of being thermoformed in accordance with a tread pattern of the sole, **characterized in that** the polyurethane admixture of the outer layer comprises a percentage of from 3% to 15% by weight of silica as an opacifying agent.

2. A film according to claim 1, wherein the outer layer (11) comprises a percentage of from 6% to 9% by weight of silica.

3. A film according to claim 1 or 2, wherein the silica is formed by pyrolisis.

4. A film according to any one of the preceding claims, wherein the outer layer is obtained by means of a spreading operation.

5. A film according to any one of the preceding claims, wherein the support layer comprises a membrane of thermoplastic polyurethane.

6. A film according to claim 5, wherein the polyurethane on which the polymer admixture forming the membrane is based is substantially identical to the polyurethane on which the polymer admixture forming the outer layer is based.

7. A film according to claim 5 or 6, wherein the membrane of thermoplastic polyurethane forming the support layer is obtained by calendering.

8. A film according to any one of the preceding claims, wherein the support layer has a thickness between 50 µm and 300 µm.

9. A film according to any one of the preceding claims, wherein the outer layer has a thickness between 20 µm and 150 µm.

10. Use of a film according to any one of the preceding claims as a tread covering film for a sole of a shoe.

11. A sole (1) for shoes comprising a main body (2) of polyurethane-based polymer material and a tread covering film (3) which is applied to the main body at a tread surface (4) of the sole, **characterized in that** the covering film is in accordance with one or more of claims 1 to 9.

12. A sole according to claim 11, wherein there is formed on the tread surface (4) a tread pattern comprising a plurality of reliefs (5) and grooves (6).

13. A process for producing a sole for shoes of polyurethane-based polymer material, comprising:
- providing a mould, on an inner surface of which there is counter-formed a tread pattern of the sole,
- providing in the mould a tread covering film in contact with the inner surface of the mould,
- pouring into the mould an admixture of expansible polyurethane reagents,
- closing the mould and reacting the admixture of expansible polyurethane reagents inside the mould so as to obtain an expanded polyurethane which adheres to the tread covering film and presses it against the inner wall, thermoforming it in accordance with the tread pattern,
- removing from the mould the sole comprising a main body which is formed by the expanded polyurethane and covered by the tread covering film at a tread surface of the sole,
**characterized in that** the tread covering film is in accordance with one or more of claims 1 to 9.

14. A process according to claim 13, wherein the tread covering film is pre-heated before being inserted in the mould.

## Patentansprüche

1. Laufflächenabdeckfolie (3) für Sohlen (1) von Schuhen aus Polymermaterial auf Polyurethanbasis, aufweisend eine Trägerschicht (10), die in der Lage ist, mit dem Polymermaterial auf Polyurethanbasis der Sohle verbunden zu werden, und eine äußere Schicht (11), die über der Trägerschicht liegt, und die von einem Polyurethangemisch gebildet wird, das in der Lage ist, entsprechend einer Laufflächenstruktur der Sohle thermogeformt zu werden, **dadurch gekennzeichnet, dass** das Polyurethangemisch der äußeren Schicht einen Prozentsatz von 3 bis 15 Gewichts-% Silica als ein Trübungsmittel aufweist.

2. Folie nach Anspruch 1, bei der die äußere Schicht (11) einen Prozentsatz von 6 bis 9 Gewichts-% Silica aufweist.

3. Folie nach Anspruch 1 oder 2, bei der das Silica durch Pyrolyse gebildet ist.

4. Folie nach einem der vorangehenden Ansprüche, bei der die äußere Schicht mittels eines Aufstreichvorgangs erhalten wurde.

5. Folie nach einem der vorangehenden Ansprüche, bei der die Trägerschicht eine Membran aus thermoplastischem Polyurethan aufweist.

6. Folie nach Anspruch 5, bei der das Polyurethan, auf dem das die Membran bildende Polymergemisch basiert, im Wesentlichen identisch ist mit dem Polyurethan, auf dem das die äußere Schicht bildende Polymergemisch basiert.

7. Folie nach Anspruch 5 oder 6, bei der die Membran aus thermoplastischem Polyurethan, die die Trägerschicht bildet, durch Kalandern erhalten wird.

8. Folie nach einem der vorangehenden Ansprüche, bei der die Trägerschicht eine Dicke zwischen 50 µm und 300 µm hat.

9. Folie nach einem der vorangehenden Ansprüche, bei der die äußere Schicht eine Dicke zwischen 20 µm und 150 µm hat.

10. Verwendung einer Folie nach einem der vorangehenden Ansprüche, als eine Laufflächenabdeckfolie für eine Sohle eines Schuhs.

11. Sohle (1) für Schuhe, aufweisend einen Hauptteil (2) aus Polymermaterial auf Polyurethanbasis und eine Laufflächenabdeckfolie (3), die an einer Laufflächenoberfläche (4) der Sohle auf den Hauptteil aufgebracht ist, **dadurch gekennzeichnet, dass** die Abdeckfolie eine Abdeckfolie gemäß einem oder mehreren der Ansprüche 1 bis 9 ist.

12. Sohle nach Anspruch 11, bei der auf der Laufflächenoberfläche (4) eine Laufflächenstruktur, die eine Mehrzahl von Erhebungen (5) und Vertiefungen (6) aufweist, ausgebildet ist.

13. Verfahren zur Herstellung einer Sohle für Schuhe aus Polymermaterial auf Polyurethanbasis, aufweisend:
- Bereitstellen eines Formwerkzeugs, bei dem an einer inneren Oberfläche ein Gegenstück der Laufflächenstruktur der Sohle ausgebildet ist,
- Bereitstellen einer Laufflächenabdeckfolie in dem Formwerkzeug in Kontakt mit der inneren Oberfläche des Formwerkzeugs,
- Gießen eines Gemisches von expansionsfähigen Polyurethan-Reagenzien in das Formwerkzeug,
- Schließen des Formwerkzeugs und Reagierenlassen des Gemisches expansionsfähiger Polyurethan-Reagenzien im Inneren des Formwerkzeugs, um ein expandiertes Polyurethan, das an der Laufflächenabdeckfolie anhaftet und sie gegen die innere Wand presst, zu erhalten, Thermoformen der Laufflächenabdeckfolie entsprechend der Laufflächenstruktur,
- Entfernen der Sohle, die einen Hauptteil aufweist, der von dem expandierten Polyurethan gebildet wird und an der Laufflächenoberfläche der Sohle von der Laufflächenabdeckfolie bedeckt ist, aus dem Formwerkzeug,
**dadurch gekennzeichnet, dass** die Laufflächenabdeckfolie eine Folie gemäß einem oder mehreren der Ansprüche 1 bis 9 ist.

14. Verfahren nach Anspruch 13, bei dem die Laufflächenabdeckfolie vorgewärmt wird, bevor sie in das Formwerkzeug eingesetzt wird.

## Revendications

1. Film de recouvrement de semelle d'usure (3) pour semelles (1) de chaussures, réalisé avec un matériau polymère à base de polyuréthane comprenant une couche de support (10) qui peut être raccordée au matériau polymère à base de polyuréthane de la semelle, et une couche externe (11) qui est superposée sur la couche de support et qui est formée par un mélange de polyuréthane pouvant être thermoformé selon un motif de semelle d'usure de la semelle, **caractérisé en ce que** le mélange de polyuréthane de la couche externe comprend un pourcentage de 3 % à 15 % en poids de silice en tant qu'agent opacifiant.

2. Film selon la revendication 1, dans lequel la couche externe (11) comprend un pourcentage de 6 % à 9 % en poids de silice.

3. Film selon la revendication 1 ou 2, dans lequel la silice est formée par pyrolyse.

4. Film selon l'une quelconque des revendications précédentes, dans lequel la couche externe est obtenue au moyen d'une opération d'enduction.

5. Film selon l'une quelconque des revendications précédentes, dans lequel la couche de support comprend une membrane de polyuréthane thermoplastique.

6. Film selon la revendication 5, dans lequel le polyuréthane sur lequel est basé le mélange de polymère formant la membrane, est sensiblement identique au polyuréthane sur lequel est basé le mélange de polymère formant la couche externe.

7. Film selon la revendication 5 ou 6, dans lequel la membrane de polyuréthane thermoplastique formant la couche de support est obtenue par calandrage.

8. Film selon l'une quelconque des revendications précédentes, dans lequel la couche de support a une épaisseur comprise entre 50 µm et 300 µm.

9. Film selon l'une quelconque des revendications précédentes, dans lequel la couche externe a une épaisseur comprise entre 20 µm et 150 µm.

10. Utilisation d'un film selon l'une quelconque des revendications précédentes, en tant que film de recouvrement de semelle d'usure pour une semelle d'une chaussure.

11. Semelle (1) pour chaussures comprenant un corps principal (2) de matériau polymère à base de polyuréthane et un film de recouvrement de semelle d'usure (3) qui est appliqué sur le corps principal au niveau d'une surface de semelle d'usure (4) de la semelle, **caractérisée en ce que** le film de recouvrement est selon une ou plusieurs des revendications 1 à 9.

12. Semelle selon la revendication 11, dans laquelle on forme sur la surface de semelle d'usure (4), un motif de semelle d'usure comprenant une pluralité de reliefs (5) et de rainures (6).

13. Procédé pour produire une semelle pour chaussures en matériau polymère à base de polyuréthane, comprenant les étapes consistant à :
- prévoir un moule, sur une surface interne duquel on contre-forme un motif de semelle d'usure de la semelle,
- prévoir, dans le moule, un film de recouvrement de semelle d'usure en contact avec la surface interne du moule,
- verser dans le moule un mélange de réactifs de polyuréthane expansible,
- fermer le moule et faire réagir le mélange de réactifs de polyuréthane expansible à l'intérieur du moule afin d'obtenir un polyuréthane expansé qui adhère au film de recouvrement de semelle d'usure et le comprime contre la paroi interne, le thermoformant selon le motif de semelle d'usure,
- retirer du moule, la semelle comprenant un corps principal qui est formé par le polyuréthane expansé et recouvert par le film de recouvrement de semelle d'usure au niveau d'une surface de semelle d'usure de la semelle,
**caractérisé en ce que** le film de recouvrement de semelle d'usure est selon une ou plusieurs des revendications 1 à 9.

14. Procédé selon la revendication 13, dans lequel le film de recouvrement de semelle d'usure est préchauffé avant d'être inséré dans le moule.
